# EUROPEAN PATENT SPECIFICATION

(11) **EP 3 992 433 B1**
(45) Date of publication and mention of the grant of the patent: **06.03.2024**
(21) Application number: 21205406.8
(22) Date of filing: 28.10.2021
(51) Int. Cl.: F01D 5/14, F01D 5/20, F01D 5/28, F04D 29/32

(54) **COMPOSITE FAN BLADE WITH LEADING EDGE SHEATH WITH ENCAPSULATING EXTENSION**
BLÄSERLAUFSCHAUFEL AUS VERBUNDWERKSTOFF MIT BLATTVORDERKANTEN-UMMANTELUNG MIT EINKAPSELUNGSERWEITERUNG
AUBE DE SOUFFLANTE EN COMPOSITE AVEC TÔLE DE RENFORCEMENT DE BORD D'ATTAQUE AVEC EXTENSION D'ENCAPSULATION

(30) Priority: 30.10.2020 US 202017085217
(43) Date of publication of application: 04.05.2022
(73) Proprietor: RTX Corporation, Farmington, CT 06032 (US)
(72) Inventor: STILIN, Nicholas D., Higganum, 06441 (US); LUSSIER, Darin S., Guildford, 06437 (US)
(74) Representative: Dehns

(56) References cited:
- EP-A1- 2 811 144
- EP-A1- 3 015 646
- EP-A1- 3 581 764
- EP-A1- 3 816 398
- EP-A2- 2 348 192
- US-A1- 2010 329 863
- US-A1- 2020 157 953

## Description

### BACKGROUND

The present invention is directed to encapsulating a composite tip of a fan blade in a modified leading edge sheath, in particular to a composite fan blade comprising such a sheath, and to a process for limiting a temperature of a composite fan blade responsive to a rub event between the composite fan blade and a fan casing liner. The modified sheath covers the tip of the composite laminate blade body. The modified sheath provides a surface configured to receive a tip treatment.

Composite materials offer potential design improvements in gas turbine engines. Composite materials are used to replace metals in gas turbine engine fan blades because of their high strength and low weight. Most legacy gas turbine engine fan blades are titanium with a thin cross-section. The ductility of titanium fan blades enables the fan to ingest a bird and remain operable or be safely shut down. The thin cross-section allows high levels of aerodynamic efficiency. The same requirements are present for composite fan blades.

A composite airfoil has a root, which connects to the fan mechanism, and a tip opposite the root. A composite airfoil for a turbine engine fan blade is typically designed with a divergent root portion known as a dovetail root. The thickness of the airfoil greatly changes over the length from the tip to the root. This is due to various strength and stiffness requirements in various locations of the airfoil to optimize the performance of the airfoil under various conditions, including a bird strike.

To optimize the efficiency of a fan in a high bypass commercial turbofan engine, the clearance between the blade tips and the fan casing must be minimized to reduce leakage during engine operation. To achieve this, conventional commercial fans are designed with a limited-rub system, such that the tips of the metallic fan blades abrade material from a sacrificial lining on the interior of the fan case to create a minimal, constant thickness gap between the blading and casing.

Ideally, the resulting abraded depth in the sacrificial lining is sufficient to accommodate all of the accumulated manufacturing and operational dimensional variation that exists between the fan blade tips and the fan case. These variations include blade and case size variation and concentricity, as well as case ovalization. The abrading of material from the fan liner by the blade tips during a rub event is most pronounced during initial engine break-in and decreases as the engine accumulates flight cycles.

Unlike conventional metallic fan blades, polymer matrix composite fan blades may be susceptible to damage by elevated temperatures that result from the frictional heating that could occur during the blade to case rub. For this reason, some high bypass commercial fans with composite fan blades employ a no-rub system, whereby interaction between the blading and casing is minimized or eliminated entirely. Unfortunately, the increased radial clearance between blading and casing required in this system results in reduced fan efficiency.

Composite fan blades typically require a no-rub system to avoid elevated temperatures of the polymeric constituents in the fan blade, primarily the laminate composite blade body. Fan efficiency suffers due to the excessive clearances between blading and casing required to minimize or eliminate rubbing. EP2348192A2, EP2811144A1, EP3581764A1, US2020/157953A1, US2010/329863A1 and EP3015646A1 disclose arrangements of the prior art.

### SUMMARY

In accordance with an aspect of the invention, a composite fan blade is provided according to claim 1.

A further embodiment of any of the foregoing embodiments may additionally include at least one feature formed on the top surface, the at least one feature configured to abrade a fan casing liner.

A further embodiment of any of the foregoing embodiments may additionally include the at least one feature is selected from the group consisting of surface structures, corrugation, roughness, dimples and contours.

A further embodiment of any of the foregoing embodiments may additionally include the extension portion is extendable for a predetermined intermediate chord length tailored to provide for a tip treatment for abrading a fan case liner to control a blade to fan case clearance.

A further embodiment of any of the foregoing embodiments may additionally include a radial thickness dimension in the sheath extension configured to control a heat transfer between the top surface and the blade tip responsive to a predetermined thermal conductivity and a predetermined thermal capacitance of a leading edge sheath material limitation and a composite blade material limitation.

A further embodiment of any of the foregoing embodiments may additionally includea length of the sheath suction side flank and length of the sheath pressure side flank are configured to allow for an adhesive reserve configured to accommodate a degradation of a bond between the sheath and blade.

A further embodiment of any of the foregoing embodiments may additionally include the metallic sheath assembly for a composite fan blade further comprising an adhesive reserve configured to accommodate a degradation of a bond between the metallic sheath and composite fan blade.

In accordance with another aspect of the invention a process for limiting a temperature of a composite fan blade is provided according to claim 10.

A further embodiment of any of the foregoing embodiments may additionally include the process further comprising thermally insulating the composite fan blade from a source of thermal energy at the top surface responsive to a rub between the composite fan blade and the fan casing liner.

A further embodiment of any of the foregoing embodiments may additionally include the process further comprising forming a radial thickness dimension in the sheath extension configured to control a heat transfer between the top surface and the tip of the composite fan blade.

A further embodiment of any of the foregoing embodiments may additionally include the process further comprising applying a feature to the top surface prior to assembling the metallic sheath onto the composite fan blade.

A further embodiment of any of the foregoing embodiments may additionally include the step of applying the feature includes use of elevated temperature application processes detrimental to a polymer matrix composite material of the composite fan blade if applied after assembly of the metallic sheath onto the composite fan blade.

A further embodiment of any of the foregoing embodiments may additionally include the process further comprising contacting the fan casing liner at discrete locations so as to: limit the thermal energy transfer between the features and composite fan blade; reduce the frictional area between the top surface and the fan casing liner; increase a thermal resistance between the top surface and the composite fan blade; and limit the thermal conduction area between the fan casing liner and the top surface.

Other details of the composite tip leading edge sheath are set forth in the following detailed description and the accompanying drawings wherein like reference numerals depict like elements.

### BRIEF DESCRIPTION OF THE DRAWINGS

FIG. 1 is a schematic cross-section of a gas turbine engine.
FIG. 2 is a schematic view of a fan blade for use in the gas turbine engine shown in FIG. 1.
FIG. 3 is a perspective view of a rotor disk with the fan blade of FIG. 2 installed.
FIG. 4 is a perspective view of a composite fan blade with leading edge sheath.
Fig. 5 is an enlarged view of a portion of the composite fan blade with leading edge sheath of Fig. 4.
Fig. 6 is a perspective view of the composite fan blade without the leading edge sheath.
Fig. 7 is a perspective view of the leading edge sheath.
Fig. 8 is a partial view of a section of a portion of the composite fan blade with leading edge sheath and tip cap.
Fig. 9 is a perspective view of the leading edge sheath with surface features.

### DETAILED DESCRIPTION

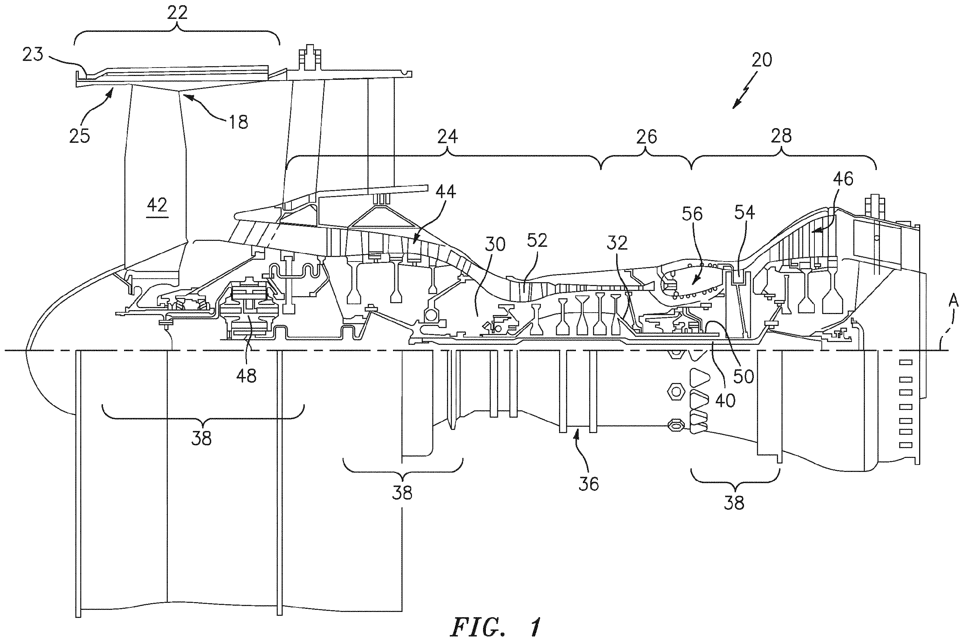

FIG. 1 schematically illustrates a gas turbine engine 20. The gas turbine engine 20 as disclosed herein has a two-spool turbofan that generally incorporates a fan section 22 with fan casing 23 and liner 25, a compressor section 24, a combustor section 26 and a turbine section 28. The fan section 22 drives air along a bypass flow path while the compressor section 24 drives air along a core flow path for compression and communication into the combustor section 26 then expansion through the turbine section 28. Although depicted as a turbofan in the disclosed non-limiting embodiment, it should be appreciated that the concepts described herein are not limited only thereto.

The engine 20 generally includes a low spool 30 and a high spool 32 mounted for rotation around an engine central longitudinal axis A relative to an engine static structure 36 via several bearing compartments 38. The low spool 30 generally includes an inner shaft 40 that interconnects a fan 42, a low pressure compressor 44 ("LPC") and a low pressure turbine 46 ("LPT"). The inner shaft 40 drives the fan 42 directly or through a geared architecture 48 to drive the fan 42 at a lower speed than the low spool 30. The high spool 32 includes an outer shaft 50 that interconnects a high pressure compressor 52 ("HPC") and high pressure turbine 54 ("HPT"). A combustor 56 is arranged between the HPC 52 and the HPT 54. The inner shaft 40 and the outer shaft 50 are concentric and rotate around the engine central longitudinal axis A which is collinear with their longitudinal axes.

Core airflow is compressed by the LPC 44 then the HPC 52, mixed with fuel and burned in the combustor 56, then expanded over the HPT 54 and the LPT 46. The turbines 46, 54 rotationally drive the respective low spool 30 and high spool 32 in response to the expansion. The main engine shafts 40, 50 are supported at a plurality of points by the bearing compartments 38. It should be appreciated that various bearing compartments 38 at various locations may alternatively or additionally be provided.

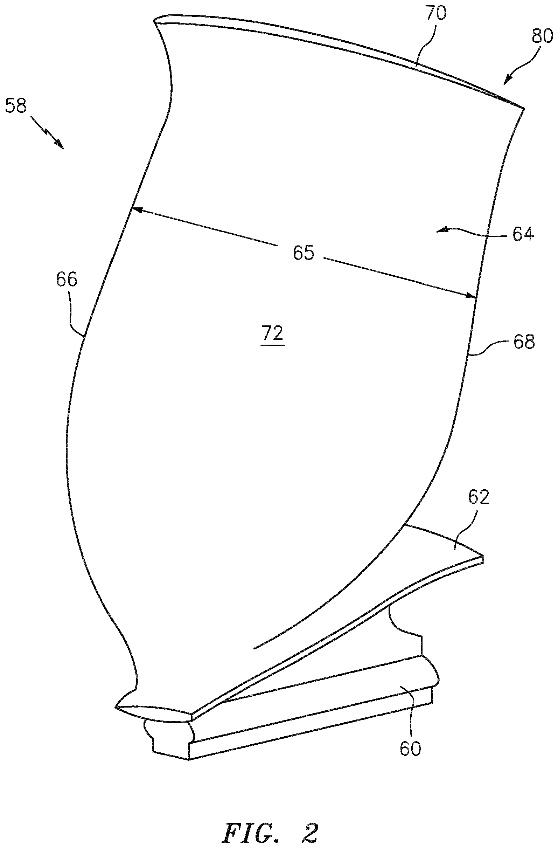

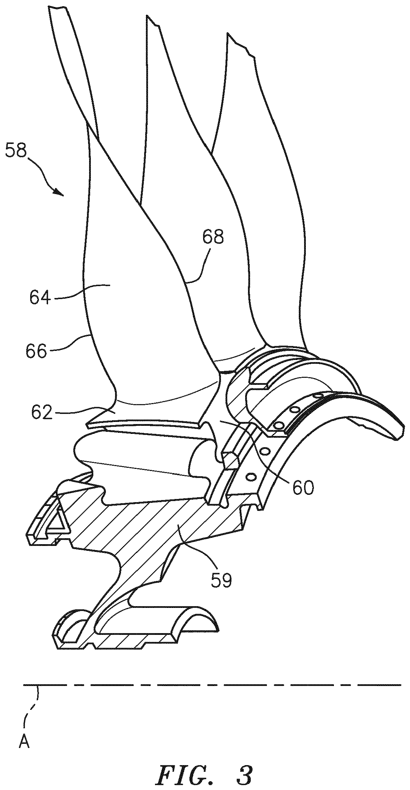

Referring also to Fig. 2 and 3, the fan section 22 includes a plurality of circumferentially spaced fan blades 58 made of a composite material. It should be understood that although a single fan stage typical of a high bypass gas turbofan engine architecture is illustrated and described in the disclosed embodiments, other stages which have other blades inclusive but not limited to fan blades, high pressure compressor blades and low pressure compressor blades may also benefit from the disclosed process.

Each fan blade 58 generally includes an innermost root portion 60, an intermediate platform portion 62, and an outermost airfoil portion 64. In one form, the root portion 60 defines an attachment such as an inverted fir tree, bulb, or dovetail, so the fan blade 58 is slidably received in a complimentary configured recess provided in a fan rotor 59 (FIG. 3). The platform portion 62 generally separates the root portion 60 and the airfoil portion 64 to define an inner boundary of the air flow path. The airfoil portion 64 defines a blade chord 65 between a leading edge 66, which may include various forward and/or aft sweep configurations, and a trailing edge 68. A concave pressure side 70 and a convex suction side 72 are defined between the leading edge 66 and the trailing edge 68. Although a fan blade 58 is illustrated in the disclosed non-limiting embodiment, compressor blades, turbofan blades, turboprop propeller blades, tilt rotor props, vanes, struts, and other airfoils may benefit from the disclosed sheath.

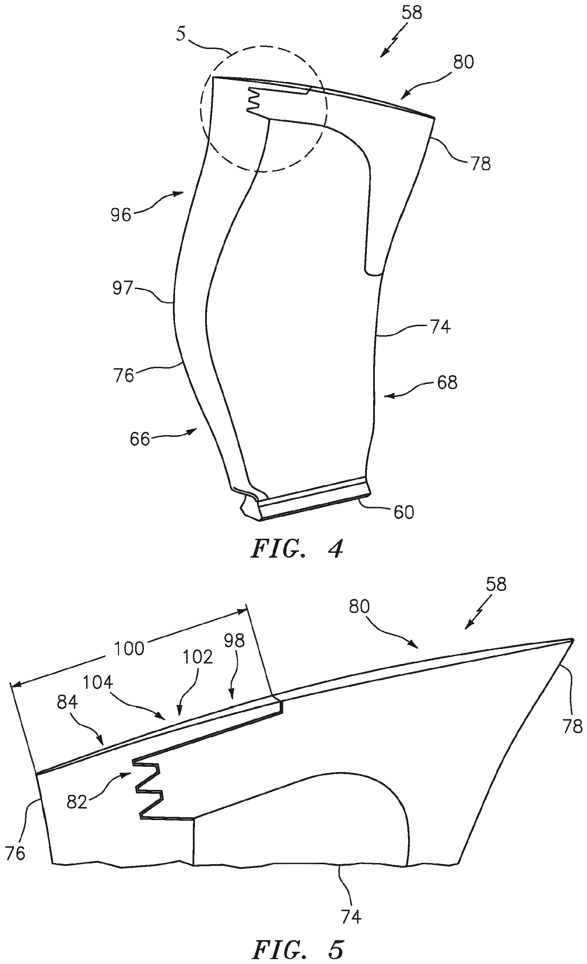

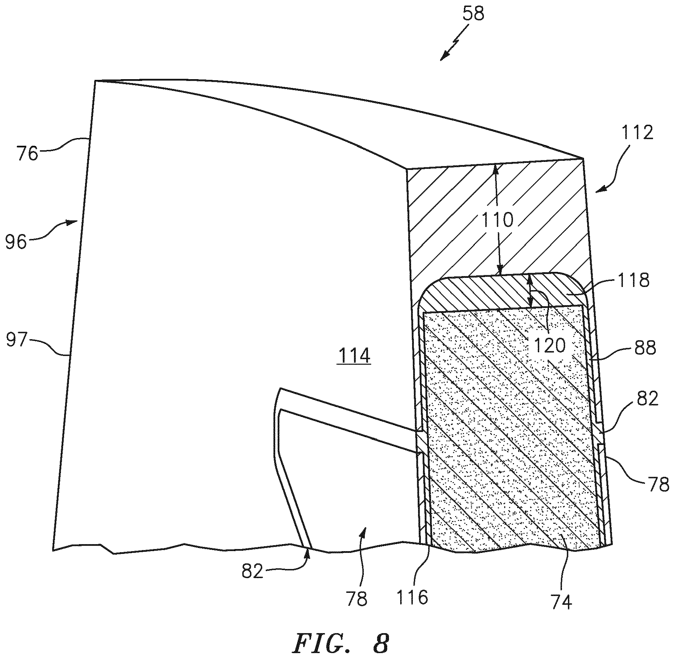

Referring also to Fig. 4 through Fig. 9, the fan blade 58 is constructed from composite material 74. The composite material 74 can include polymer matrix composite material for fan blades 58. A leading edge sheath 76 is coupled to the fan blade 58 proximate the leading edge 66 of the fan blade 58. The leading edge sheath 76 includes metal material. The leading edge sheath 76 encapsulates the fan blade 58 polymer matrix composite material 74 and thermally isolates the polymer matrix composite material 74 from the thermal energy developed from a rub between the leading edge sheath 76 and the fan casing 23. A tip cap 78 is also shown coupled to the fan blade 58 proximate a tip 80 of the fan blade 58. The tip cap 78 can be made of metal material.

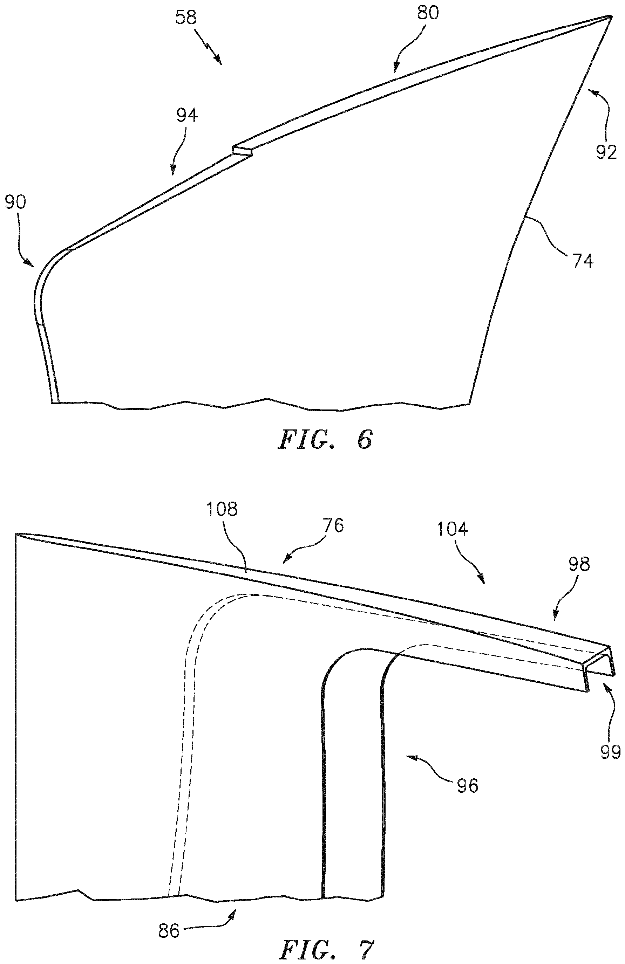

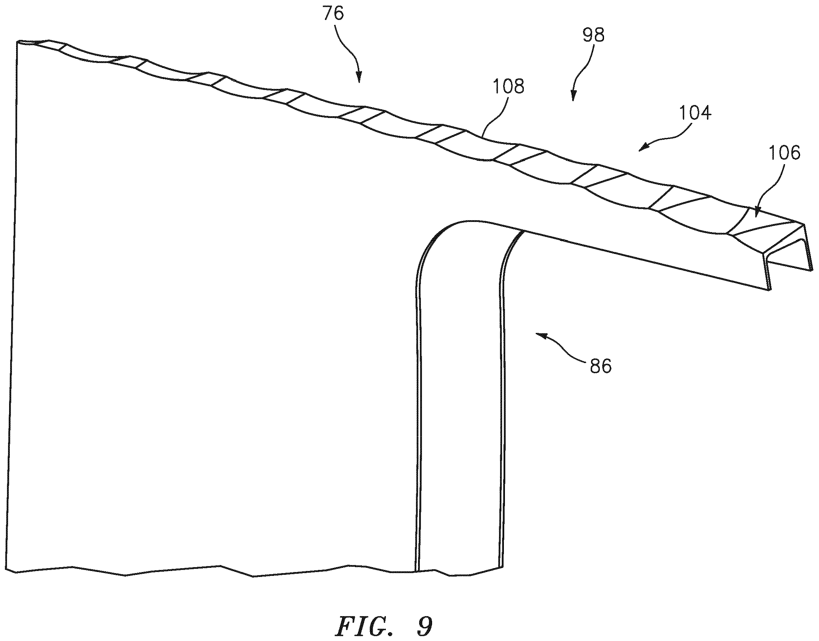

The tip cap 78 and leading edge sheath 76 are joined at a joint 82. The joint 82 can comprise a finger joint as shown on Fig. 5, or as a butt joint 86 (Fig. 7 or 9). The joint 82 can include a staggered configuration as shown in Fig. 7 and 9. The leading edge sheath 76 and tip cap 78 can be adhesively bonded with an adhesive 88 to the composite material blade 74 covering portions of the forward 90, aft 92 and radially outboard 94 portions of the fan blade 58.

The leading edge sheath 76 includes a body 96 with a leading edge portion 97 and an extension portion 98 with an encapsulation portion 99. The leading edge portion 97 extends proximate the blade leading edge 66. The extension portion 98 and encapsulation portion 99 encapsulates and extends over the tip 80 a distance of an intermediate airfoil chord length 100. The extension portion 98 can be cantilevered extending aft along the blade tip 80. The extension portion 98 intermediate chord length 100 can be tailored responsive to a predetermined abrading length needed for the case liner 25. To allow installation of the leading edge sheath 76 with cantilevered encapsulating extension portion 98 onto the laminate composite blade body 96, the maximum value of the intermediate chord length 100 is that which coincides with the maximum thickness of the laminate composite blade body 96. In an exemplary embodiment, the extension portion 98 can terminate at a location along the tip 80 where the airfoil of the blade 58 thickness is increasing or remains constant with respect to the chord length 65

The composite blade 58 can be machined to receive the leading edge sheath 76 proximate the forward portion 90, radially outboard 94 portion and along part of the tip 80 in order to reduce the quantity of machining to be performed on the leading edge sheath 76. The tip cap 78 can have a truncated section 102 to allow for the leading edge sheath 76 extension portion 98 to extend over the truncated section 102. The leading edge sheath 76 extension portion 98 and encapsulation portion 99 encapsulates the tip 80 to optimize the length with respect to the weight and cost of the design as well as allow for implementation of a limited-rub-system 104.

The limited-rub system 104 of the leading edge sheath 76 includes tip treatment features, or simply features 106. The features 106 are configured to abrade the fan casing 23 liner 25 and allow for limited clearance 18 between the blade 58 and casing 23. The features 106 can include surface structures, such as corrugation, roughness, dimples, contours and the like. The extension portion 98 is configured to provide a robust metallic top surface 108 to support the features 106. The top surface 108 allows for abrasive features 106 instead of being supported on the composite tip 80 material. The features 106 can allow for contacting the fan casing liner 25 in small, discrete locations, thus limiting the generation of thermal energy by reducing the frictional area as well as increasing the thermal resistance by limiting the thermal conduction area.

The features 106, such as tip treatment, can be applied to the top surface 108 prior to assembling the leading edge sheath 76 onto the composite blade 58. Application of the features 106 to the leading edge sheath 76, independently of the composite blade 58, allows for cost reduction as well as permitting the use of elevated temperature application processes that could be detrimental to the polymer matrix composite material of the composite blade 58 if applied after assembly of the leading edge sheath 78 onto the composite blade 58. Examples of elevated temperature processes used for applying tip features 106 can include curing of polyimide resins or adhesives, such as polyimide matrix tip treatment, as well as plasma spraying metal matrix tip treatment.

The leading edge sheath 76 can include a radial thickness 110. The dimension of the radial thickness 110 can be increased or decreased responsive to the required thermal conductivity and thermal capacitance of the leading edge sheath 76 and composite blade 58 material limitations. Adjusting the radial thickness 110 can limit the maximum temperature exposure of the adjacent composite material 74 due to thermal energy generated during transient rub events of the blade 58 and casing liner 25. The radial thickness 110 can be constant along the extension portion 98 or tapered to balance the requirements for thermal conductivity, thermal capacitance, material strength and weight.

The leading edge sheath 76 includes a sheath pressure side flank 112 and sheath suction side flank 114 opposite the pressure side 112 and corresponding to the pressure side 70 and suction side 72 of the blade 58 respectively. Each of the sheath pressure side flank 112 and sheath suction side flank 114 extend along the blade 58 and permit the adhesive 88 between the sheath 76 and blade composite 74 to react to the sheath 76 centrifugal load in shear and not in tension. The length of each sheath flank, 112, 114, can be dimensioned to allow for an adhesive reserve 116 configured to accommodate degradation of the bond between the sheath 76 and blade 58 over the lifetime of the blade 58. The length of the sheath flanks 112, 114 that adhere the leading edge sheath 76 to the fan blade 58 can be tailored such that the peak adhesive shear stress in the adhesive 88, due to operational and impact loads, should be within the strength allowable for the adhesive 88. A trough of minimally stressed adhesive 88 is present to take load as the adhesive bond environmentally deteriorates or suffers operational damage while in service. The shear stress is highest at the ends of the sheath flanks 112, 114, and at the tip 80 of the blade 58, and decreases in the interior of the bond of the adhesive 88.

A thermal isolator or simply insulator 118 is formed between the leading edge sheath 76 extension 98 and the tip 80 of the blade 58. The insulator 118 acts as a thermal resistor with a thickness 120 that can be adjusted responsive to a predetermined thermal resistance desired. The insulator 118 can be formed of insulation material 122. The insulation material 122 can include high temperature polyimide foam or resin and the like to increase thermal resistance. The insulator 118 can allow for a broader selection of materials that make up the extension portion 98, as well as the features 106, while providing protection for the polymeric constituents of the blade 58 from elevated temperatures during engine operation with blade 58 to case 23 rubs. The radial thickness 110 distribution of the encapsulation portion 99 wall and adhesive layer 88 can be sized to limit the maximum thickness of the laminate composite body 96 as a result of a transient rub event. The top surface 108 of the extension portion 98 can increase in temperature during a rub event due to frictional heating caused by contact of the blade 58 with the abradable surface of the fan casing liner 25. The radial temperature distribution in the leading edge sheath 76 through the radial thickness 110, adhesive 88, insulator 118 and laminate composite 74 can be determined by assuming a one dimensional heat flow in a radial direction. The temperature at any radial location in the leading edge sheath 76, adhesive 88, insulator 118 or laminate composite 74 can be obtained from: T(x, t) = Tₒ + (Tᵢ - Tₒ) erf (x/(2sqrt(ατ) where Tₒ = elevated temperature of tip treatment features due to frictional heating; Tᵢ = initial steady state temperature of airfoil; x = radial distance from top surface of leading edge sheath, adhesive or laminate composite; α = thermal diffusivity of leading edge sheath, adhesive, insulator, or laminate composite; τ = elapsed time.

The disclosed leading edge sheath provides the technical advantage of supporting a tipping treatment to efficiently remove material from the liner in the fan case to form a minimal gap between blading and casing without subjecting the composite constituents of the fan blade to excessive temperatures.

The disclosed leading edge sheath provides the technical advantage of covering the forward portion of the airfoil tip where the maximum pressure differential is realized across the airfoil.

The disclosed leading edge sheath provides the technical advantage of including a sheath extension having a predetermined intermediate chord length tailored to provide for the desired tip treatment for abrading the fan case liner to control the blade to case clearance.

The disclosed leading edge sheath provides the technical advantage of including a robust metallic top surface configured with features, such as tip treatment for improved abrading.

The disclosed leading edge sheath provides the technical advantage of allowing for tip treatment to be applied prior to installation to allow for elevated temperature applications without the risk of damaging the composite blade materials.

The disclosed leading edge sheath provides the technical advantage of having a radial thickness dimension in the sheath extension configured to control the heat transfer and thus the maximum temperature of the adjacent composite blade material.

The disclosed leading edge sheath provides the technical advantage of sheath flanks of the sheath extension that can be adjusted to include an insulator between the sheath material and the composite blade material.

The disclosed leading edge sheath provides the technical advantage of including a thermally resistant material with the insulator.

The disclosed leading edge sheath provides the technical advantage of including surface features on the outer surface of the sheath to minimize contact area with the fan case liner and reducing heat generation.

There has been provided a composite fan blade with a metallic tip leading edge sheath. While the composite fan blade has been described in the context of specific embodiments thereof, other unforeseen alternatives, modifications, and variations may become apparent to those skilled in the art having read the foregoing description. Accordingly, it is intended to embrace those alternatives, modifications, and variations which fall within the scope of the appended claims.

## Claims

1. A composite fan blade (58) comprising:
a metallic sheath (76) having a body (96) comprising:
a leading edge portion (97) configured to cover a leading edge (66) of the blade (58);
an extension portion (98) with an encapsulation portion (99), the extension portion (98) having a top surface (108) adjacent the leading edge portion (97) and being configured to cover a portion (94) of a tip (80) of the blade (58) along an intermediate chord length (100), the encapsulation portion (99) being opposite said top surface (108) and configured to couple with the tip (80) of the blade (58);
a sheath suction side flank (114) configured to overlap a suction side (72) of the blade (58); and
a sheath pressure side flank (112) opposite said suction side flank (114) configured to overlap a pressure side (70) of the blade (58); **characterized by**:
an insulator (118) coupled between the encapsulation portion (99) and the tip (80) of the blade (58), said insulator (118) being configured as a thermal resistor with a thickness adjustable responsive to a predetermined thermal resistance;
a tip cap (78) coupled to said metallic sheath (76) and coupled to the tip (80) of the blade (58) and to an aft portion (92) of the blade (58); and
a joint (82) formed between said metallic sheath (76) and said tip cap (78).

2. The composite fan blade according to claim 1, further comprising:
at least one feature (106) formed on said top surface (108), said at least one feature (106) configured to abrade a fan casing liner.

3. The composite fan blade according to claim 2, wherein said at least one feature (106) is selected from the group consisting of surface structures, corrugation, roughness, dimples and contours.

4. The composite fan blade according to claim 1, 2 or 3, wherein said extension portion (98) is extendable for a predetermined intermediate chord length (100).

5. The composite fan blade according to claim 4, wherein the predetermined intermediate chord length (100) is tailored to provide for a tip treatment for abrading a fan case liner to control a blade to fan case clearance.

6. The composite fan blade according to any preceding claim, further comprising:
a radial thickness dimension (110) in the extension portion (98) thickness adjusted to control a heat transfer between the top surface (108) and the tip (80) of the blade (58).

7. The composite fan blade according to claim 6, wherein the radial thickness dimension (110) is thickness adjusted to control a heat transfer between the top surface (108) and the tip (80) of the blade (58) responsive to a predetermined thermal conductivity and a predetermined thermal capacitance of a sheath material limitation and a composite blade material limitation.

8. The composite fan blade according to any preceding claim, wherein a length of said sheath suction side flank (114) and length of said sheath pressure side flank (112) are dimensioned to allow for an adhesive reserve (116) to accommodate a degradation of a bond between the sheath (76) and a blade.

9. The composite fan blade according to any preceding claim, further comprising:
an adhesive reserve (116) to accommodate a degradation of a bond between the metallic sheath (76) and a composite fan blade.

10. A process for limiting a temperature of a composite fan blade (58) responsive to a rub event between the composite fan blade (58) and a fan casing liner (25) comprising:
coupling a metallic sheath (76) to the composite fan blade (58), said metallic sheath (76) having a body (96) comprising:
a leading edge portion (97) configured to cover a leading edge (66) of the composite fan blade (58);
an extension portion (98) with an encapsulation portion (99), the extension portion (98) having a top surface (108) adjacent the leading edge portion (97) and being configured to cover a portion (94) of a tip (80) of the composite fan blade (58) along an intermediate chord length (100), the encapsulation portion (99) being opposite said top surface (108) configured to couple with the tip (80) of the composite fan blade (58);
a sheath suction side flank (114) configured to overlap a suction side (72) of the composite fan blade (58); and
a sheath pressure side flank (112) opposite said suction side flank (114) configured to overlap a pressure side (70) of the composite fan blade (58);
**characterised in that** coupling the metallic sheath (76) to the composite fan blade (58) includes:
coupling an insulator (118) between the encapsulation portion (99) and the tip (80) of the composite fan blade (58), said insulator (118) being configured as a thermal resistor with a thickness adjustable responsive to a predetermined thermal resistance;
coupling a tip cap (78) to said metallic sheath (76);
coupling the tip cap (78) to the tip (80) of the composite fan blade (58) and to an aft portion (92) of the composite fan blade (58); and
forming a joint (82) between said metallic sheath (76) and said tip cap (78).

11. The process of claim 10, further comprising:
thermally insulating the composite fan blade (58) from a source of thermal energy at the top surface (108) responsive to a rub between the composite fan blade (58) and the fan casing liner (25).

12. The process of claim 10 or 11, further comprising:
forming a radial thickness dimension (110) in the extension portion (98) thickness adjusted to control a heat transfer between the top surface (108) and the tip (80) of the composite fan blade (58).

13. The process of any of claims 10-12, further comprising:
applying a feature (106) to the top surface (108) prior to assembling the metallic sheath (76) onto the composite fan blade (58) .

14. The process of claim 13, wherein the step of applying the feature (106) includes use of elevated temperature application processes detrimental to a polymer matrix composite material of the composite fan blade (58) if applied after assembly of the metallic sheath (76) onto the composite fan blade (58).

15. The process of any of claims 10-14, further comprising:
contacting the fan casing liner (25) at discrete locations so as to:
limit the thermal energy transfer between a or the feature (106) and the composite fan blade (58);
reduce a frictional area between the top surface (108) and the fan casing liner (25);
increase a thermal resistance between said top surface (108) and said composite fan blade (58); and
limit the thermal conduction area between said fan casing liner (25) and said top surface (108).

## Patentansprüche

1. Bläserlaufschaufel aus Verbundwerkstoff (58), Folgendes umfassend:
eine Metallummantelung (76), die einen Körper (96) aufweist, Folgendes umfassend:
einen Blattvorderkantenabschnitt (97), der konfiguriert ist, um eine Blattvorderkante (66) der Laufschaufel (58) abzudecken;
einen Erweiterungsabschnitt (98) mit einem Einkapselungsabschnitt (99), wobei der Erweiterungsabschnitt (98) eine obere Fläche (108) benachbart zu dem Blattvorderkantenabschnitt (97) aufweist und konfiguriert ist, um einen Abschnitt (94) einer Spitze (80) der Laufschaufel (58) entlang einer Zwischensehnenlänge (100) abzudecken, wobei der Einkapselungsabschnitt (99) gegenüber der oberen Fläche (108) liegt und konfiguriert ist, um mit der Spitze (80) der Laufschaufel (58) gekoppelt zu werden;
eine saugseitige Flanke (114) der Ummantelung, die konfiguriert ist, um eine Saugseite (72) der Laufschaufel (58) zu überlappen; und
eine druckseitige Flanke (112) der Ummantelung gegenüber der saugseitigen Flanke (114), die konfiguriert ist, um eine Druckseite (70) der Laufschaufel (58) zu überlappen; **gekennzeichnet durch**:
einen Isolator (118), der zwischen dem Einkapselungsabschnitt (99) und der Spitze (80) der Laufschaufel (58) gekoppelt ist, wobei der Isolator (118) als thermischer Widerstand mit einer Dicke konfiguriert ist, die als Reaktion auf einen vorbestimmten Wärmewiderstand einstellbar ist;
eine Spitzenkappe (78), die mit der Metallummantelung (76) gekoppelt ist und mit der Spitze (80) der Laufschaufel (58) und einem hinteren Abschnitt (92) der Laufschaufel (58) gekoppelt ist; und
ein Gelenk (82), das zwischen der Metallummantelung (76) und der Spitzenkappe (78) gebildet ist.

2. Bläserlaufschaufel aus Verbundwerkstoff nach Anspruch 1, ferner Folgendes umfassend:
mindestens ein Element (106), das auf der oberen Fläche (108) gebildet ist, wobei das mindestens eine Element (106) konfiguriert ist, um eine Bläsergehäuseauskleidung abzuschleifen.

3. Bläserlaufschaufel aus Verbundwerkstoff nach Anspruch 2, wobei das mindestens eine Element (106) aus der Gruppe ausgewählt ist, die aus Oberflächenstrukturen, Riffelung, Rauheit, Grübchen und Konturen besteht.

4. Bläserlaufschaufel aus Verbundwerkstoff nach Anspruch 1, 2 oder 3, wobei der Erweiterungsabschnitt (98) über eine vorbestimmte Zwischensehnenlänge (100) erweiterbar ist.

5. Bläserlaufschaufel aus Verbundwerkstoff nach Anspruch 4, wobei die vorbestimmte Zwischensehnenlänge (100) zugeschnitten ist, um eine Spitzenbehandlung zum Abschleifen einer Bläsergehäuseauskleidung bereitzustellen, um einen Abstand zwischen Laufschaufel und Bläsergehäuse zu steuern.

6. Bläserlaufschaufel aus Verbundwerkstoff nach einem der vorhergehenden Ansprüche, ferner Folgendes umfassend:
eine radiale Dickenabmessung (110) in dem Erweiterungsabschnitt (98), deren Dicke angepasst ist, um eine Wärmeübertragung zwischen der oberen Fläche (108) und der Spitze (80) der Laufschaufel (58) zu steuern.

7. Bläserlaufschaufel aus Verbundwerkstoff nach Anspruch 6, wobei die radiale Dickenabmessung (110) in der Dicke angepasst ist, um eine Wärmeübertragung zwischen der oberen Fläche (108) und der Spitze (80) der Schaufel (58) als Reaktion auf eine vorbestimmte Wärmeleitfähigkeit und eine vorbestimmte Wärmekapazität einer Begrenzung des Ummantelungsmaterials und einer Begrenzung des Materials der Laufschaufel aus Verbundwerkstoff zu steuern.

8. Bläserlaufschaufel aus Verbundwerkstoff nach einem der vorhergehenden Ansprüche, wobei die Länge der saugseitigen Flanke (114) der Ummantelung und die Länge der druckseitigen Flanke (112) der Ummantelung so bemessen sind, dass einer Klebstoffreserve (116) der Ausgleich eines Abbaus einer Verbindung zwischen der Ummantelung (76) und einer Laufschaufel ermöglicht wird.

9. Bläserlaufschaufel aus Verbundwerkstoff nach einem der vorhergehenden Ansprüche, ferner Folgendes umfassend:
eine Klebstoffreserve (116) zum Ausgleich eines Abbaus einer Verbindung zwischen der Metallummantelung (76) und einer Bläserlaufschaufel aus Verbundwerkstoff.

10. Verfahren zum Begrenzen der Temperatur einer Bläserlaufschaufel aus Verbundwerkstoff (58) als Reaktion auf ein Reibungsereignis zwischen der Bläserlaufschaufel aus Verbundwerkstoff (58) und einer Bläsergehäuseauskleidung (25), Folgendes umfassend:
Koppeln einer Metallummantelung (76) mit der Bläserlaufschaufel aus Verbundwerkstoff (58), wobei die Metallummantelung (76) einen Körper (96) aufweist, der Folgendes umfasst:
einen Blattvorderkantenabschnitt (97), der konfiguriert ist, um eine Blattvorderkante (66) der Bläserlaufschaufel aus Verbundwerkstoff (58) abzudecken;
einen Erweiterungsabschnitt (98) mit einem Einkapselungsabschnitt (99), wobei der Erweiterungsabschnitt (98) eine obere Fläche (108) benachbart zu dem Blattvorderkantenabschnitt (97) aufweist und konfiguriert ist, um einen Abschnitt (94) einer Spitze (80) der Bläserlaufschaufel aus Verbundwerkstoff (58) entlang einer Zwischensehnenlänge (100) abzudecken, wobei der Einkapselungsabschnitt (99) gegenüber der oberen Fläche (108) liegt und konfiguriert ist, um mit der Spitze (80) der Bläserlaufschaufel aus Verbundwerkstoff (58) gekoppelt zu werden;
eine saugseitige Flanke (114) der Ummantelung, die konfiguriert ist, um eine Saugseite (72) der Bläserlaufschaufel aus Verbundwerkstoff (58) zu überlappen; und
eine druckseitige Flanke (112) der Ummantelung gegenüber der saugseitigen Flanke (114), die konfiguriert ist, um eine Druckseite (70) der Bläserlaufschaufel aus Verbundwerkstoff (58) zu überlappen;
**dadurch gekennzeichnet, dass** das Koppeln der Metallummantelung (76) mit der Bläserlaufschaufel aus Verbundwerkstoff (58) Folgendes beinhaltet:
Koppeln eines Isolators (118) zwischen dem Einkapselungsabschnitt (99) und der Spitze (80) der Bläserlaufschaufel aus Verbundwerkstoff (58), wobei der Isolator (118) als thermischer Widerstand mit einer Dicke konfiguriert ist, die als Reaktion auf einen vorbestimmten Wärmewiderstand einstellbar ist;
Koppeln einer Spitzenkappe (78) an die Metallummantelung (76);
Koppeln der Spitzenkappe (78) mit der Spitze (80) der Bläserlaufschaufel aus Verbundwerkstoff (58) und mit einem hinteren Abschnitt (92) der Bläserlaufschaufel aus Verbundwerkstoff (58); und
Bilden eines Gelenks (82) zwischen der Metallummantelung (76) und der Spitzenkappe (78).

11. Verfahren nach Anspruch 10, ferner Folgendes umfassend:
thermisches Isolieren der Bläserlaufschaufel aus Verbundwerkstoff (58) von einer Wärmeenergiequelle an der oberen Fläche (108), als Reaktion auf eine Reibung zwischen der Bläserlaufschaufel aus Verbundwerkstoff (58) und der Bläsergehäuseauskleidung (25).

12. Verfahren nach Anspruch 10 oder 11, ferner Folgendes umfassend:
Bilden einer radialen Dickenabmessung (110) in dem Erweiterungsabschnitt (98), deren Dicke angepasst ist, um eine Wärmeübertragung zwischen der oberen Fläche (108) und der Spitze (80) der Bläserlaufschaufel aus Verbundwerkstoff (58) zu steuern.

13. Verfahren nach einem der Ansprüche 10-12, ferner Folgendes umfassend:
Anbringen eines Elementes (106) auf der oberen Fläche (108), bevor die Metallummantelung (76) auf der Bläserlaufschaufel aus Verbundwerkstoff (58) montiert wird.

14. Verfahren nach Anspruch 13, wobei der Schritt des Anbringens des Elementes (106) die Verwendung von Verfahren zum Anbringen bei erhöhter Temperatur beinhaltet, die schädlich für ein Polymermatrix-Verbundmaterial der Bläserlaufschaufel aus Verbundwerkstoff (58) sind, wenn sie nach der Montage der Metallummantelung (76) an der Bläserlaufschaufel aus Verbundwerkstoff (58) angebracht werden.

15. Verfahren nach einem der Ansprüche 10-14, ferner Folgendes umfassend:
Kontaktieren der Bläsergehäuseauskleidung (25) an diskreten Stellen, um:
die Wärmeenergieübertragung zwischen einem oder dem Element (106) und der Bläserlaufschaufel aus Verbundwerkstoff (58) zu begrenzen;
eine Reibungsfläche zwischen der oberen Fläche (108) und der Bläsergehäuseauskleidung (25) zu reduzieren;
einen Wärmewiderstand zwischen der oberen Fläche (108) und der Bläserlaufschaufel aus Verbundwerkstoff (58) zu erhöhen; und
die Wärmeleitungsfläche zwischen der Bläsergehäuseauskleidung (25) und der oberen Fläche (108) zu begrenzen.

## Revendications

1. Aube de soufflante en composite (58) comprenant :
une gaine métallique (76) ayant un corps (96) comprenant :
une partie de bord d'attaque (97) configurée pour recouvrir un bord d'attaque (66) de l'aube (58) ;
une partie d'extension (98) avec une partie d'encapsulation (99), la partie d'extension (98) ayant une surface supérieure (108) adjacente à la partie de bord d'attaque (97) et étant configurée pour recouvrir une partie (94) d'une pointe (80) de l'aube (58) le long d'une longueur de corde intermédiaire (100), la partie d'encapsulation (99) étant opposée à ladite surface supérieure (108) et configurée pour s'accoupler à la pointe (80) de l'aube (58) ;
un flanc côté aspiration de gaine (114) configuré pour chevaucher un côté aspiration (72) de l'aube (58) ; et
un flanc côté pression de gaine (112) opposé audit flanc côté aspiration (114) configuré pour chevaucher un côté pression (70) de l'aube (58) ; **caractérisé par** :
un isolant (118) couplé entre la partie d'encapsulation (99) et la pointe (80) de l'aube (58), ledit isolant (118) étant configuré comme une résistance thermique avec une épaisseur ajustable en réponse à une résistance thermique prédéterminée ;
un capuchon de pointe (78) couplé à ladite gaine métallique (76) et couplé à la pointe (80) de l'aube (58) et à une partie arrière (92) de l'aube (58) ; et
un joint (82) formé entre ladite gaine métallique (76) et ledit capuchon de pointe (78).

2. Aube de soufflante en composite selon la revendication 1, comprenant en outre :
au moins une caractéristique (106) formée sur ladite surface supérieure (108), ladite au moins une caractéristique (106) étant configurée pour abraser un revêtement de boîtier de soufflante.

3. Aube de soufflante en composite selon la revendication 2, dans laquelle ladite au moins une caractéristique (106) est sélectionnée dans le groupe constitué des structures de surface, des ondulations, des rugosités, des fossettes et des contours.

4. Aube de soufflante en composite selon la revendication 1, 2 ou 3, dans laquelle ladite partie d'extension (98) est extensible sur une longueur de corde intermédiaire prédéterminée (100) .

5. Aube de soufflante en composite selon la revendication 4, dans laquelle la longueur de corde intermédiaire prédéterminée (100) est adaptée pour fournir un traitement de pointe pour abraser un revêtement de boîtier de soufflante pour contrôler le jeu entre l'aube et le boîtier de soufflante.

6. Aube de soufflante en composite selon une quelconque revendication précédente, comprenant en outre :
une dimension d'épaisseur radiale (110) dans l'épaisseur de la partie d'extension (98) ajustée pour contrôler un transfert de chaleur entre la surface supérieure (108) et la pointe (80) de l'aube (58).

7. Aube de soufflante en composite selon la revendication 6, dans laquelle la dimension d'épaisseur radiale (110) est ajustée en épaisseur pour contrôler un transfert de chaleur entre la surface supérieure (108) et la pointe (80) de l'aube (58) en réponse à une conductivité thermique prédéterminée et à une capacité thermique prédéterminée d'une limitation de matériau de gaine et d'une limitation de matériau d'aube en composite.

8. Aube de soufflante en composite selon une quelconque revendication précédente, dans laquelle une longueur dudit flanc côté aspiration de gaine (114) et une longueur dudit flanc côté pression de gaine (112) sont dimensionnées pour permettre à une réserve adhésive (116) de s'adapter à une dégradation d'une liaison entre la gaine (76) et une aube.

9. Aube de soufflante en composite selon une quelconque revendication précédente, comprenant en outre :
une réserve adhésive (116) pour s'adapter à une dégradation d'une liaison entre la gaine métallique (76) et une aube de soufflante en composite.

10. Procédé de limitation de la température d'une aube de soufflante en composite (58) en réponse à un événement de frottement entre l'aube de soufflante en composite (58) et un revêtement de boîtier de soufflante (25), comprenant :
le couplage d'une gaine métallique (76) à l'aube de soufflante en composite (58), ladite gaine métallique (76) ayant un corps (96) comprenant :
une partie de bord d'attaque (97) configurée pour recouvrir un bord d'attaque (66) de l'aube de soufflante en composite (58) ;
une partie d'extension (98) avec une partie d'encapsulation (99), la partie d'extension (98) ayant une surface supérieure (108) adjacente à la partie de bord d'attaque (97) et étant configurée pour recouvrir une partie (94) d'une pointe (80) de l'aube de soufflante en composite (58) le long d'une longueur de corde intermédiaire (100), la partie d'encapsulation (99) étant opposée à ladite surface supérieure (108) et configurée pour s'accoupler à la pointe (80) de l'aube de soufflante en composite (58) ;
un flanc côté aspiration de gaine (114) configuré pour chevaucher un côté aspiration (72) de l'aube de soufflante en composite (58) ; et
un flanc côté pression de gaine (112) opposé audit flanc côté aspiration (114) configuré pour chevaucher un côté pression (70) de l'aube de soufflante en composite (58) ;
**caractérisé en ce que** le couplage de la gaine métallique (76) à l'aube de soufflante en composite (58) comporte :
le couplage d'un isolant (118) entre la partie d'encapsulation (99) et la pointe (80) de l'aube de soufflante en composite (58), ledit isolant (118) étant configuré comme une résistance thermique avec une épaisseur ajustable en réponse à une résistance thermique prédéterminée ;
le couplage d'un capuchon de pointe (78) à ladite gaine métallique (76) ;
le couplage du capuchon de pointe (78) à la pointe (80) de l'aube de soufflante en composite (58) et à une partie arrière (92) de l'aube de soufflante en composite (58) ; et
la formation d'un joint (82) entre ladite gaine métallique (76) et ledit capuchon de pointe (78).

11. Procédé selon la revendication 10, comprenant en outre :
l'isolation thermique de l'aube de soufflante en composite (58) d'une source d'énergie thermique au niveau de la surface supérieure (108) en réponse à un frottement entre l'aube de soufflante en composite (58) et le revêtement de boîtier de soufflante (25).

12. Procédé selon la revendication 10 ou 11, comprenant en outre :
la formation d'une dimension d'épaisseur radiale (110) dans l'épaisseur de la partie d'extension (98) ajustée pour contrôler un transfert de chaleur entre la surface supérieure (108) et la pointe (80) de l'aube de soufflante en composite (58).

13. Procédé selon l'une quelconque des revendications 10 à 12, comprenant en outre :
l'application d'une caractéristique (106) sur la surface supérieure (108) avant d'assembler la gaine métallique (76) sur l'aube de soufflante en composite (58).

14. Procédé selon la revendication 13, dans lequel l'étape d'application de la caractéristique (106) comporte l'utilisation de processus d'application à température élevée préjudiciables à un matériau composite à matrice polymère de l'aube de soufflante en composite (58) s'il est appliqué après l'assemblage de la gaine métallique (76) sur l'aube de soufflante en composite (58).

15. Procédé selon l'une quelconque des revendications 10 à 14, comprenant en outre :
la mise en contact avec le revêtement de boîtier de soufflante (25) à des endroits discrets de manière à :
limiter le transfert d'énergie thermique entre une ou la caractéristique (106) et l'aube de soufflante en composite (58) ;
réduire une zone de friction entre la surface supérieure (108) et le revêtement de boîtier de soufflante (25) ;
augmenter une résistance thermique entre ladite surface supérieure (108) et ladite aube de soufflante en composite (58) ; et
limiter la zone de conduction thermique entre ledit revêtement de boîtier de soufflante (25) et ladite surface supérieure (108) .
